# EUROPEAN PATENT SPECIFICATION

(11) **EP 3 929 876 B1**
(45) Date of publication and mention of the grant of the patent: **03.01.2024**
(21) Application number: 21170445.7
(22) Date of filing: 26.04.2021
(51) Int. Cl.: G06T 11/60

(54) **FACE EDITING METHOD AND APPARATUS, ELECTRONIC DEVICE AND READABLE STORAGE MEDIUM**
VERFAHREN UND GERÄT ZUR GESICHTSBEARBEITUNG, ELEKTRONISCHE VORRICHTUNG UND LESBARES SPEICHERMEDIUM
PROCÉDÉ ET APPAREIL D'ÉDITION DU VISAGE, DISPOSITIF ÉLECTRONIQUE ET SUPPORT D'ENREGISTREMENT LISIBLE

(30) Priority: 22.06.2020 CN 202010576349
(43) Date of publication of application: 29.12.2021
(73) Proprietor: Beijing Baidu Netcom Science and Technology Co., Ltd., Beijing 100085 (CN)
(72) Inventor: HU, Tianshu, Beijing, Beijing 100085 (CN); LIU, Jiaming, Beijing, Beijing 100085 (CN); HE, Shengyi, Beijing, Beijing 100085 (CN); HONG, Zhibin, Beijing, Beijing 100085 (CN)
(74) Representative: dompatent von Kreisler Selting Werner - Partnerschaft von Patent- und Rechtsanwälten mbB

(56) References cited:
- ZHANG GANG ET AL: "Generative Adversarial Network with Spatial Attention for Face Attribute Editing", 6 October 2018 (2018-10-06), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 422 - 4, XP047488204, ISBN: 978-3-642-17318-9 [retrieved on 2018-10-06] * abstract; figure 2 * * section 2 Generative Adversarial Network with Spatial Attention and subsections. *
- GU SHUYANG ET AL: "Mask-Guided Portrait Editing With Conditional GANs", 2019 IEEE/CVF CONFERENCE ON COMPUTER VISION AND PATTERN RECOGNITION (CVPR), IEEE, 15 June 2019 (2019-06-15), pages 3431-3440, XP033686996, DOI: 10.1109/CVPR.2019.00355 [retrieved on 2020-01-08]
- ZHU PEIHAO ET AL: "SEAN: Image Synthesis With Semantic Region-Adaptive Normalization", 2020 IEEE/CVF CONFERENCE ON COMPUTER VISION AND PATTERN RECOGNITION (CVPR), IEEE, 13 June 2020 (2020-06-13), pages 5103-5112, XP033804776, DOI: 10.1109/CVPR42600.2020.00515 [retrieved on 2020-08-03]
- TING-CHUN WANG ET AL: "High-Resolution Image Synthesis and Semantic Manipulation with Conditional GANs", ARXIV.ORG, CORNELL UNIVERSITY LIBRARY, 201 OLIN LIBRARY CORNELL UNIVERSITY ITHACA, NY 14853, 30 November 2017 (2017-11-30), XP081410865,
- Hyeon Seok Yang, Jeong Hoon Han, Young Shik Moon: "Improved STGAN for Facial Attribute Editing by Utilizing Mask Information", , 1 May 2020 (2020-05-01), pages 1-9, XP055848941, DOI: 10.9708/jksci.2020.25.05.001 Retrieved from the Internet: URL:https://www.koreascience.or.kr/article /JAKO202016151585613.pdf [retrieved on 2021-10-07]
- Hyeon Seok Yang, Jeong Hoon Han, Young Shik Moon: "MSaGAN: Improved SaGAN using Guide Mask and Multitask Learning Approach for Facial Attribute Editing", , 1 May 2020 (2020-05-01), pages 37-46, XP055848951, DOI: 10.9708/jksci.2020.25.05.037 Retrieved from the Internet: URL:https://www.koreascience.or.kr/article /JAKO202016151585655.pdf [retrieved on 2021-10-07]

## Description

### TECHNICAL FIELD

The present disclosure relates to the field of Internet technologies, and particularly to the field of image processing and deep learning technologies, and more particularly to a face editing method and apparatus, an electronic device and a readable storage medium.

### BACKGROUND

Currently, short video and live video applications are widely used by more and more users. These applications contain interactive functions related to faces, such as face makeup, face shaping, face editing, face-expression triggered animation effects, or the like.

In the prior art, usually, the face editing function is achieved by merging preset stickers with a face. However, when the face editing function is achieved by manually setting the stickers, on the one hand, cost is high, and on the other hand, all users share one set of stickers, and different parts in the face are unable to be freely edited under different demands.

Gang Zhang et al. discloses in "Generative Adversarial Network with Spatial Attention for Face Attribute Editing", 6 October 2018 (2018-10-06), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013, a face attribute editing method which introduces the spatial attention mechanism into Generative Adversarial Network (GAN) framework to only alter the attribute-specific region and keep the rest unchanged. Original image I is input respectively into Attribute Manipulation Network AMN and Spatial Attention Network SAN to obtain an edited face image Ia and a spatial attention mask b, and a final edited face image is obtained as a function of Ia, b and I.

### SUMMARY

According to the technical solution adopted in the present disclosure to solve the technical problem, there is provided a computer implemented face editing method, a face editing apparatus, a device, a storage medium and a computer product as claimed in claims 1, 6 and 11-13.

The face editing method includes: acquiring a face image in an image to be processed; converting an attribute of the face image according to an editing attribute to generate an attribute image; segmenting semantically the attribute image, and then processing a semantic segmentation image according to the editing attribute to generate a mask image; and merging the attribute image with the image to be processed using the mask image to generate a result image.

The face editing apparatus, includes: an acquiring unit configured for acquiring a face image in an image to be processed; a converting unit configured for converting an attribute of the face image according to an editing attribute to generate an attribute image; a processing unit configured for, segmenting semantically the attribute image, and then processing a semantic segmentation image according to the editing attribute to generate a mask image; and a merging unit configured for merging the attribute image with the image to be processed using the mask image to generate a result image.

The electronic device includes: at least one processor; and a memory connected with the at least one processor communicatively; the memory stores instructions executable by the at least one processor to enable the at least one processor to carry out the method described above.

The non-transitory computer readable storage medium includes instructions which, when executed by a computer, cause the computer to carry out the method described above.

The computer program product includes instructions which, when the program is executed by a computer, cause the computer to carry out the method described above.

An embodiment of the above-mentioned application has the following advantages or beneficial effects: with the technical solution, the cost for editing the face may be reduced, and different parts in the face may be freely edited under different demands, thereby improving face editing flexibility. Adoption of the technical means of processing the semantic segmentation image according to the editing attribute to generate the mask image solves the technical problems of high cost and low editing flexibility caused by face fusion performed with stickers in the prior art, and achieves the technical effect of improving the face editing flexibility.

Other effects of the above-mentioned alternatives will be described below in conjunction with embodiments.

### BRIEF DESCRIPTION OF THE DRAWINGS

The drawings are used for better understanding the present solution and do not constitute a limitation of the present disclosure. In the drawings:
Fig. 1 is a schematic diagram according to a first embodiment of the present disclosure;
Figs. 2A to 2E are schematic diagrams according to a second embodiment of the present disclosure;
Fig. 3 is a schematic diagram according to a third embodiment of the present disclosure; and
Fig. 4 is a block diagram of an electronic device configured for implementing a face editing method according to an embodiment of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope of the present disclosure. Similarly, for clarity and conciseness, the descriptions of the known functions and structures are omitted in the descriptions below.

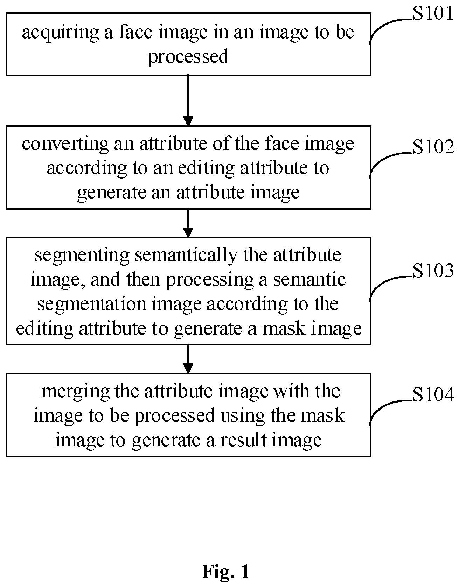

Fig. 1 is a schematic diagram according to a first embodiment of the present disclosure. As shown in Fig. 1, a face editing method according to this embodiment may include the following steps:
S101: acquiring a face image in an image to be processed;
S102: converting an attribute of the face image according to an editing attribute to generate an attribute image;
S103: segmenting semantically the attribute image, and then processing a semantic segmentation image according to the editing attribute to generate a mask image; and
S104: merging the attribute image with the image to be processed using the mask image to generate a result image.

With the face editing method according to this embodiment, different parts in the face may be freely edited under different demands, thereby improving face editing flexibility.

The image to be processed in this embodiment may be a single image, or include image frames obtained by splitting a video. If the image to be processed in an example includes image frames in the video, after acquiring the result images corresponding respectively to the image frames, the result images are sequentially combined to generate the result video.

In this embodiment, the face image in the image to be processed may be acquired by: detecting face key points of the image to be processed to acquire face key point information; and cutting out the face image from the image to be processed according to the obtained face key point information.

It may be understood that, in this embodiment, the face image may be acquired from the image by a neural network model obtained through a pre-training process, and the way of acquiring the face image is not limited in this embodiment.

Since different images to be processed may have different sizes, in order to ensure that the face may be edited for the to-be-processed images with different sizes, in an example, after the face image is acquired, the face image may be subjected to affine transformation into a preset size which may be 256×256.

In order to obtain the attribute image with a better effect, before converting the attribute of the face image according to the editing attribute, the method according to an example may further include: pre-processing the face image corresponding to the editing attribute, herein different editing attributes correspond to different pre-processing operations.

For example, if the editing attribute is "getting younger", and the pre-processing corresponding to the editing attribute is warping, in this embodiment, the pre-processing before the attribute conversion is performed on the face image according to the editing attribute is to reduce the chin of the face in the face image; and if the editing attribute is "changing into woman", and the pre-processing corresponding to the editing attribute is padding, in this embodiment, the pre-processing before the attribute conversion is performed on the face image according to the editing attribute is to pad a background in the face image (for example, supply hair).

In this embodiment, after the face image is acquired, the attribute conversion is performed on the face image according to the editing attribute to generate the attribute image corresponding to the face image. The editing attribute, for example, includes at least one of a gender attribute and an age attribute, the gender attribute includes "changing into man" or "changing into woman" and the age attribute includes "getting younger" or "getting older"; that is, in this embodiment, the gender and/or age of the face in the image is converted.

Therefore, in the generated attribute image in this embodiment, the attribute of the face is changed with features, such as the identity, expression, posture, or the like, of the face in the image kept unchanged. For example, if the editing attribute is "getting older", in this embodiment, after a young face image of user A is input, the generated attribute image is an old face image of the user A, and the features, such as the expression, posture, or the like, of the user A in the old face image are all consistent with those in the young face image.

The editing attribute in this embodiment may be determined according to selection of the user. In this embodiment, the editing attribute may also be determined according to an attribute corresponding to a current attribute, for example, if the current attribute is "young" and the attribute corresponding to the current attribute is "old", the editing attribute may be "getting older"; and if the current attribute is "woman" and the attribute corresponding to the current attribute is "man", the editing attribute may be "changing into man".

When performing the attribute conversion on the face image according to the editing attribute to generate the attribute image, the method may include: acquiring a sticker corresponding to the editing attribute, and then merging the obtained sticker with the face image to obtain the attribute image.

In this embodiment, the attribute conversion may be performed on the face image according to the editing attribute to generate the attribute image by: inputting the editing attribute and the face images into an attribute editing model obtained through a pre-training process, and taking an output result of the attribute editing model as the attribute image. The attribute editing model in this embodiment is a deep learning neural network, and may automatically edit attributes of the face in the face image according to the editing attribute, so as to obtain the attribute image after the attribute conversion.

It may be understood that the attribute editing model in this embodiment is a generation model in a generative adversarial network, and a foreground image, a merging mask and a background image are modeled simultaneously when the generative adversarial network is trained, such that the generation model obtained through the training process may fill up a missing part of the background in the generated attribute image, thereby obtaining the attribute image with a better conversion effect.

According to the invention, after the attribute image corresponding to the face image is acquired, the generated attribute image is subjected to semantic segmentation to obtain a semantic segmentation image, and then, the semantic segmentation image is processed according to the editing attribute to generate a mask image. The generated mask image is a binary image composed of 0 and 1, and is used to control image merging areas, the area with a pixel value of 1 in the mask image is selected from content in the attribute image, and the area with a pixel value of 0 is selected from content in the image to be processed.

The semantic segmentation in an example means segmenting each part of the face in the attribute image, for example, parts of the face, such as the eyes, nose, mouth, eyebrows, hair, or the like, are obtained by division, and different colors are used in the semantic segmentation image to represent different parts. In this embodiment, the semantic segmentation may be performed on the attribute image using the prior art to obtain the semantic segmentation image, which is not repeated herein.

The semantic segmentation image may be processed according to the editing attribute to generate the mask image by: determining an edited part corresponding to the editing attribute, herein different editing attributes correspond to different edited parts; and setting the values of the pixels in the determined edited part in the semantic segmentation image to 1, and setting the values of the remaining pixels to 0, so as to obtain the mask image.

For example, if the editing attribute is "getting older", and the edited parts corresponding to the editing attribute are the eyes, nose, mouth, eyebrows, chin, cheek and forehead, the values of the pixels in the above-mentioned parts in the semantic segmentation image are set to 1, and the values of the other pixels are set to 0; if the editing attribute is "changing into woman", and the edited parts corresponding to the editing attribute are the eyes, mouth, eyebrows and chin, the values of the pixels in the above-mentioned parts in the semantic segmentation image are set to 1, and the values of the other pixels are set to 0.

Therefore, the semantic segmentation image is processed in conjunction with the editing attribute, such that the generated mask image may correspond to different editing attributes, thereby achieving the purpose of freely editing different parts in the face under different demands.

After the mask image is generated, the attribute image is merged with the image to be processed using the generated mask image, so as to generate the result image corresponding to the image to be processed.

In addition, before merging the attribute image with the image to be processed using the generated mask image, the method according to this embodiment may further include: performing super-resolution processing on the attribute image to generate a super-definition attribute image; and merging the super-definition attribute image with the image to be processed using the mask image.

In this embodiment, the super-definition attribute image is obtained by the super-resolution processing, such that on the one hand, the size of the attribute image may be enlarged (for example, a 256×256 image is enlarged into a 512×512 image), and thus, the size of the face of the user may be better matched; on the other hand, blur present in the attribute image may be removed.

In order to improve the accuracy of the merging between the attribute image and the image to be processed, in this embodiment, the attribute image may be merged with the image to be processed using the mask image by: aligning the mask image, the attribute image and the image to be processed according to face positions; determining an area in the to-be-processed image corresponding to the pixel values of 0 in the mask image, and keeping image content of this area unchanged; and determining an area in the to-be-processed image corresponding to the pixel values of 1 in the mask image, and replacing image content of this area with image content of a corresponding area in the attribute image.

That is, in this embodiment, the attribute image and the image to be processed are merged according to the generated mask image, and since the mask image corresponds to the editing attribute, only the corresponding image content in the attribute image is used to replace the image content in the image to be processed, thereby achieving the purpose of freely editing different parts in the face under different demands, and improving the face editing flexibility.

It may be understood that, if size transformation is performed after the face image is acquired, in this embodiment, when the mask image, the attribute image and the image to be processed are aligned according to the face positions, the sizes of the mask image and the attribute image are required to be transformed into the size of the face in the image to be processed.

In the above-mentioned method according to this embodiment, firstly, the face image is converted according to the editing attribute to generate the attribute image, then, the attribute image is processed according to the editing attribute to generate the mask image, and finally, the attribute image and the image to be processed are merged using the mask image to generate the result image, such that different parts in the face may be freely edited under different requirements, thereby improving the face editing flexibility.

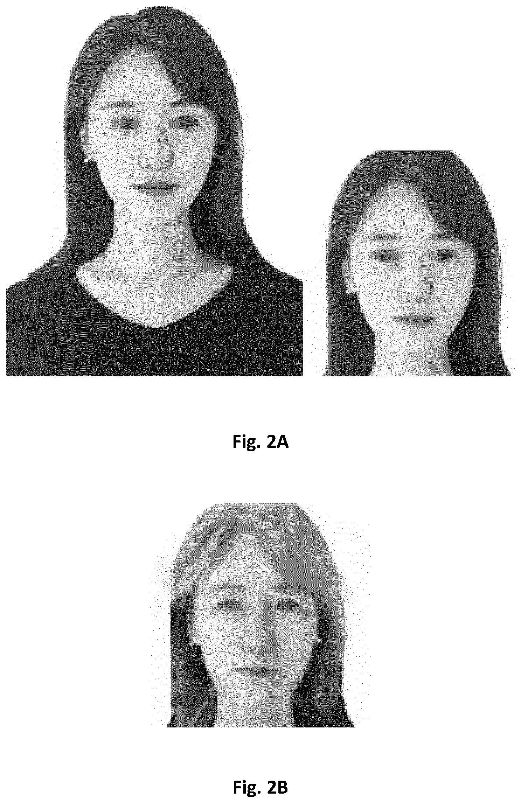

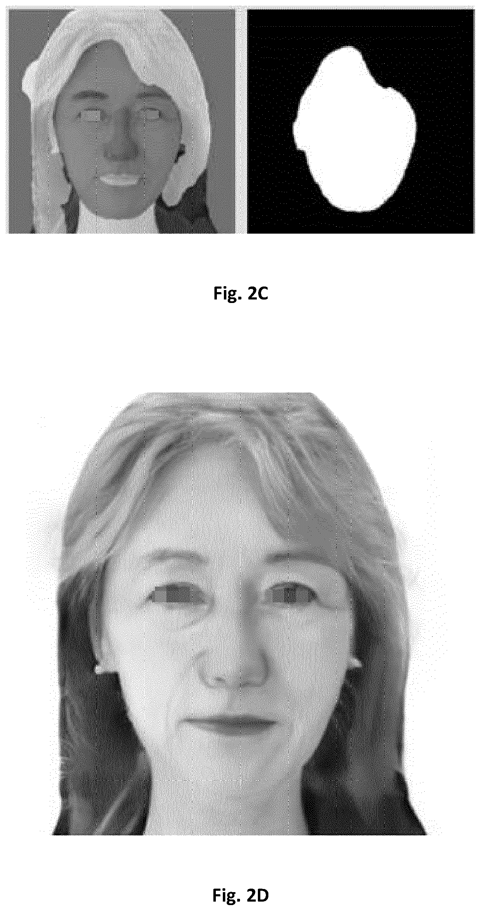

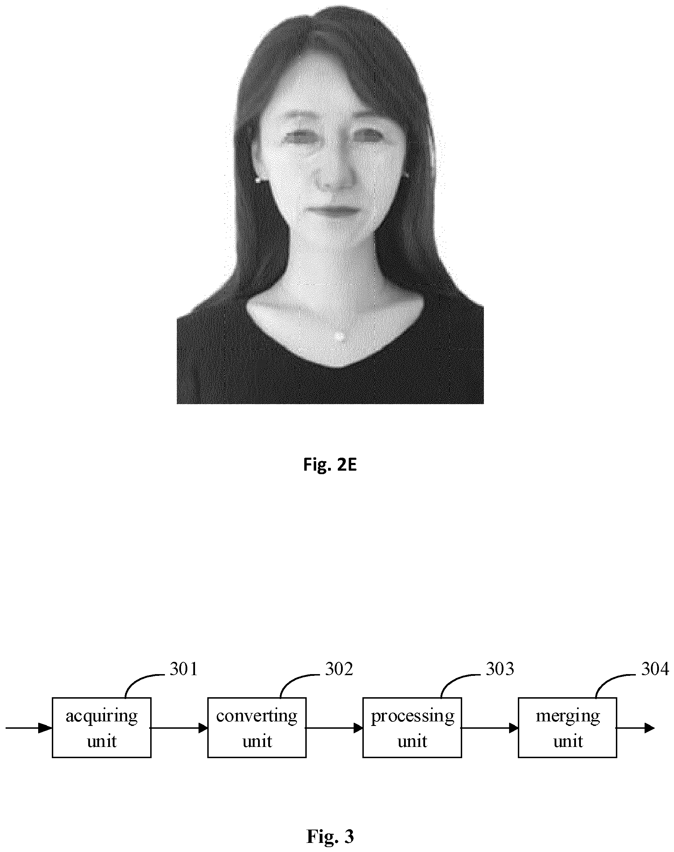

Figs. 2A to 2E are schematic diagrams according to a second embodiment of the present disclosure, with Fig. 2A being a to-be-processed image and a face image therein, Fig. 2B being an attribute image of the face image, Fig. 2C being a semantic segmentation image and a mask image of the attribute image, Fig. 2D being a super-definition attribute image obtained by enlarging the size of the attribute image by two times, and Fig. 2E being a result image of the to-be-processed image; and compared with the to-be-processed image, the result image has no change in other features except that the face attribute (getting older) of a corresponding part in the mask image is changed.

Fig. 3 is a schematic diagram according to a third embodiment of the present disclosure. As shown in Fig. 3, a face editing apparatus according to this embodiment may include:
an acquiring unit 301 configured for acquiring a face image in an image to be processed;
a converting unit 302 configured for converting an attribute of the face image according to an editing attribute to generate an attribute image;
a processing unit 303 configured for, segmenting semantically the attribute image, and then processing a semantic segmentation image according to the editing attribute to generate a mask image; and
a merging unit 304 configured for merging the attribute image with the image to be processed using the mask image to generate a result image.

In this embodiment, the acquiring unit 301 may acquire the face image in the image to be processed by: detecting face key points of the image to be processed to acquire face key point information; and cutting out the face image from the image to be processed according to the obtained face key point information.

It may be understood that, the acquiring unit 301 may acquire the face image from the image by a neural network model obtained through a pre-training process, and the way of acquiring the face image is not limited.

Since different images to be processed may have different sizes, in order to ensure that the face may be edited for the to-be-processed images with different sizes, after acquiring the face image, the acquiring unit 301 may perform affine transformation on the face image into a preset size which may be 256×256.

In order to obtain the attribute image with a better effect, before performing attribute conversion on the face image according to the editing attribute, the converting unit 302 may further pre-process the face image corresponding to the editing attribute, herein different editing attributes correspond to different pre-processing operations.

In this embodiment, after the acquiring unit 301 acquires the face image, the converting unit 302 converts the attribute of the face image according to the editing attribute to generate the attribute image corresponding to the face image. The editing attribute in the converting unit 302 includes at least one of a gender attribute and an age attribute, the gender attribute includes "changing into man" or "changing into woman", and the age attribute includes "getting younger" or "getting older"; that is, the converting unit 302 converts the gender and/or age of the face in the image.

Therefore, in the attribute image generated by the converting unit 302, the attribute of the face is changed while features, such as the identity, expression, posture, or the like, of the face in the image are kept unchanged.

The editing attribute in the converting unit 302 may be determined according to selection of the user. The converting unit 302 may also determine the editing attribute according an attribute corresponding to a current attribute.

When performing the attribute conversion on the face image according to the editing attribute to generate the attribute image, the converting unit 302 may first acquire a sticker corresponding to the editing attribute, and then merge the obtained sticker with the face image to obtain the attribute image.

The converting unit 302 may perform the attribute conversion on the face image according to the editing attribute to generate the attribute image by: inputting the editing attribute and the face images into an attribute editing model obtained through a pre-training process, and taking an output result of the attribute editing model as the attribute image. The attribute editing model in the converting unit 302 may automatically edit attributes of the face in the face image according to the editing attribute, so as to obtain the attribute image after the attribute conversion.

In this embodiment, after the converting unit 302 acquires the attribute image corresponding to the face image, the processing unit 303 first segmenting semantically the generated attribute image to acquire the semantic segmentation image, and then processes the acquired semantic segmentation image according to the editing attribute to generate the mask image. The mask image generated by the processing unit 303 is a binary image composed of 0 and 1, and is used to control image merging areas, the area with a pixel value of 1 in the mask image is selected from content in the attribute image, and the area with a pixel value of 0 is selected from content in the image to be processed.

The semantic segmentation performed by the processing unit 303 means segmentation of each part of the face in the attribute image, for example, parts of the face, such as the eyes, nose, mouth, eyebrows, hair, or the like, are obtained by division, and different colors are used in the semantic segmentation image to represent different parts.

The processing unit 303 may process the semantic segmentation image according to the editing attribute to generate the mask image by: determining an edited part corresponding to the editing attribute, herein different editing attributes correspond to different edited parts; and setting the value of the pixel in the determined edited part in the semantic segmentation image to 1, and setting the values of other pixels to 0, so as to obtain the mask image.

Therefore, the processing unit 303 processes the semantic segmentation image in conjunction with the editing attribute, such that the generated mask image may correspond to different editing attributes, thereby achieving the purpose of freely editing different parts in the face under different demands.

After the processing unit 303 generates the mask image, the merging unit 304 merges the attribute image with the image to be processed using the generated mask image, so as to generate the result image corresponding to the image to be processed.

In addition, before merging the attribute image with the image to be processed using the generated mask image, the merging unit 304 may further: perform super-resolution processing on the attribute image to generate a super-definition attribute image; and merge the super-definition attribute image with the image to be processed using the mask image.

The merging unit 304 obtains the super-definition attribute image by the super-resolution processing, such that on the one hand, the size of the attribute image may be enlarged (for example, a 256×256 image is enlarged into a 512×512 image), and thus, the size of the face of the user may be better matched; on the other hand, blur present in the attribute image may be removed.

In order to improve the accuracy of the merging between the attribute image and the image to be processed, the merging unit 304 may merge the attribute image with the image to be processed using the mask image by: aligning the mask image, the attribute image and the image to be processed according to face positions; determining an area in the to-be-processed image corresponding to the pixel values of 0 in the mask image, and keeping image content of this area unchanged; and determining an area in the to-be-processed image corresponding to the pixel values of 1 in the mask image, and replacing image content of this area with image content of a corresponding area in the attribute image.

That is, the merging unit 304 merges the attribute image and the image to be processed according to the generated mask image, and since the mask image corresponds to the editing attribute, only the corresponding image content in the attribute image is used to replace the image content in the image to be processed, thereby achieving the purpose of freely editing different parts in the face under different demands, and improving the face editing flexibility.

It may be understood that, if the acquiring unit 301 performs size transformation after the face image is acquired, when aligning the mask image, the attribute image and the image to be processed according to the face position, the merging unit 304 is required to transform the sizes of the mask image and the attribute image into the size of the face in the image to be processed.

According to an embodiment of the present disclosure, there are also provided an electronic device, a computer readable storage medium and a computer program product.

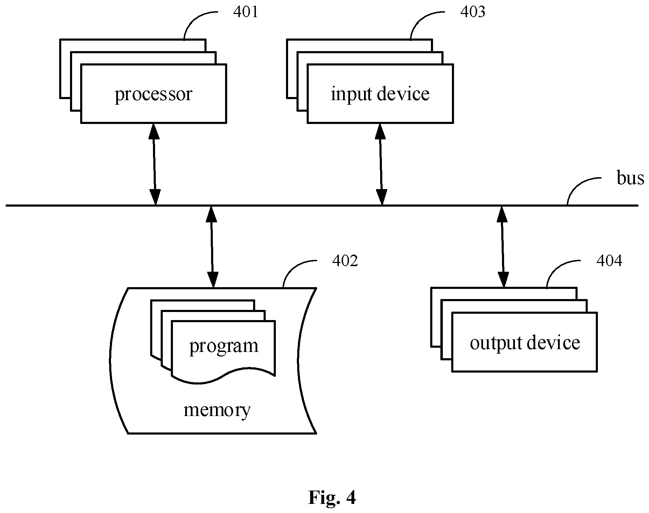

Fig. 4 is a block diagram of an electronic device for a face editing method according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 4, the electronic device includes one or more processors 401, a memory 402, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 4, one processor 401 is taken as an example.

The memory 402 is configured as the non-transitory computer readable storage medium according to the present disclosure. The memory stores instructions which are executable by the at least one processor to cause the at least one processor to perform a face editing method according to the present disclosure. The non-transitory computer readable storage medium according to the present disclosure stores computer instructions for causing a computer to perform the face editing method according to the present disclosure.

The memory 402 which is a non-transitory computer readable storage medium may be configured to store non-transitory software programs, non-transitory computer executable programs and modules, such as program instructions/modules corresponding to the face editing method according to the embodiment of the present disclosure (for example, the acquiring unit 301, the converting unit 302, the processing unit 303 and the merging unit 304 shown in Fig. 3). The processor 401 executes various functional applications and data processing of a server, that is, implements the face editing method according to the above-mentioned embodiment, by running the non-transitory software programs, instructions, and modules stored in the memory 402.

The memory 402 may include a program storage area and a data storage area, and the program storage area may store an operating system and an application program required for at least one function; the data storage area may store data created according to use of the electronic device, or the like. Furthermore, the memory 402 may include a high-speed random access memory, or a non-transitory memory, such as at least one magnetic disk storage device, a flash memory device, or other non-transitory solid state storage devices. In some embodiments, optionally, the memory 402 may include memories remote from the processor 401, and such remote memories may be connected to the electronic device for the face editing method via a network. Examples of such a network include, but are not limited to, the Internet, intranets, local area networks, mobile communication networks, and combinations thereof.

The electronic device for the face editing method may further include an input device 403 and an output device 404. The processor 401, the memory 402, the input device 403 and the output device 404 may be connected by a bus or other means, and Fig. 4 takes the connection by a bus as an example.

The input device 403 may receive input numeric or character information and generate key signal input related to user settings and function control of the electronic device for the face editing method, such as a touch screen, a keypad, a mouse, a track pad, a touch pad, a pointing stick, one or more mouse buttons, a trackball, a joystick, or the like. The output device 404 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

In the technical solution according to the embodiment of the present disclosure, firstly, the face image is converted according to the editing attribute to generate the attribute image, then, the attribute image is processed according to the editing attribute to generate the mask image, and finally, the attribute image and the image to be processed are merged using the mask image to generate the result image, such that different parts in the face may be freely edited under different requirements, thereby improving the face editing flexibility.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within principle of the present disclosure all should be included in the extent of protection of the present disclosure.

## Claims

1. A computer-implemented face editing method, comprising:
acquiring (S101) a face image in an image to be processed;
converting (S102) an attribute of the face image according to an editing attribute to generate an attribute image;
**characterized in that**, the method further comprises:
segmenting (S103) semantically the attribute image to divide face parts in the attribute image, determining different edited parts of the face parts according to the editing attribute to generate a mask image with values of pixels in the edited parts being 1, and values of pixels in the remaining parts of the face parts being 0; and
merging (S104) the attribute image with the image to be processed using the mask image to generate a result image.

2. The method according to claim 1, further comprising:
after acquiring (S101) the face image in the image to be processed, transforming the size of the face image into a preset size.

3. The method according to claim 1 or 2, further comprising:
before converting (S102) the attribute of the face image according to the editing attribute, pre-processing the face image corresponding to the editing attribute.

4. The method according to any of claims 1 to 3, further comprising:
before merging (S104) the attribute image with the image to be processed using the mask image, performing super-resolution processing on the attribute image to generate a super-definition attribute image; and
merging the super-definition attribute image with the image to be processed using the mask image.

5. The method according to any one of claims 1 to 4, wherein merging (S104) the attribute image with the image to be processed using the mask image to generate the result image comprises:
aligning the mask image, the attribute image and the image to be processed according to face positions;
determining an area in the to-be-processed image corresponding to the pixel values of 0 in the mask image, and keeping image content of this area unchanged; and
determining an area in the to-be-processed image corresponding to the pixel values of 1 in the mask image, and replacing image content of this area with image content of a corresponding area in the attribute image.

6. A face editing apparatus, comprising:
means for acquiring (S101) a face image in an image to be processed;
means for converting (S102) an attribute of the face image according to an editing attribute to generate an attribute image;
**characterized in that**, the apparatus further comprises:
means for, segmenting (S103) semantically the attribute image to divide face parts in the attribute image, determining different edited parts of the face parts according to the editing attribute to generate a mask image with values of pixels in the edited parts being 1, and values of pixels in the remaining parts of the face parts being 0; and
means for merging (S104) the attribute image with the image to be processed using the mask image to generate a result image.

7. The apparatus according to claim 6, further comprising:
means for after acquiring (S101) the face image in the image to be processed, converting the size of the face image into a preset size.

8. The apparatus according to claim 6 or 7, further comprising:
means for before converting (S102) the attribute of the face image according to the editing attribute, pre-processing the face image corresponding to the editing attribute.

9. The apparatus according to any one of claims 6 to 8, further comprising:
means for before merging (S104) the attribute image with the image to be processed using the mask image, performing super-resolution processing on the attribute image to generate a super-definition attribute image; and
means for merging the super-definition attribute image with the image to be processed using the mask image.

10. The apparatus according to any one of claims 6 to 9, wherein the means for merging (S104) comprises:
means for aligning the mask image, the attribute image and the image to be processed according to face positions;
means for determining an area in the to-be-processed image corresponding to the pixel values of 0 in the mask image, and keeping image content of this area unchanged; and
means for determining an area in the to-be-processed image corresponding to the pixel values of 1 in the mask image, and replacing image content of this area with image content of a corresponding area in the attribute image.

11. An electronic device, comprising:
at least one processor; and
a memory connected with the at least one processor communicatively;
wherein the memory stores instructions executable by the at least one processor to enable the at least one processor to carry out the method according to any one of claims 1 to 5.

12. A non-transitory computer readable storage medium comprising instructions which, when executed by a computer, cause the computer to carry out the method according to any one of claims 1 to 5.

13. A computer program product comprising instructions which, when the program is executed by a computer, cause the computer to carry out the method according to any one of claims 1 to 5.

## Patentansprüche

1. Computerimplementiertes Verfahren zur Gesichtsbearbeitung, das umfasst:
Erfassen (S101) eines Gesichtsbildes in einem zu verarbeitenden Bild;
Umwandeln (S102) eines Attributs des Gesichtsbildes entsprechend einem Bearbeitungsattribut, um ein Attributbild zu erzeugen;
**dadurch gekennzeichnet, dass** das Verfahren ferner umfasst:
semantisches Segmentieren (S103) des Attributbildes, um Gesichtsteile in dem Attributbild zu teilen, Bestimmen verschiedener bearbeiteter Teile des Gesichtsteils entsprechend dem Bearbeitungsattribut, um ein Maskierungsbild zu erzeugen, wobei die Pixelwerte in den bearbeiteten Teilen 1 sind, und wobei die Pixelwerte in den verbleibenden Teilen der Gesichtsteile 0 sind; und
Zusammenführen (S104) des Attributbildes mit dem zu verarbeitenden Bild unter Verwendung des Maskierungsbildes, um eine Ergebnisbild zu erzeugen.

2. Verfahren nach Anspruch 1, das ferner umfasst:
nach dem Erfassen (S101) des Gesichtsbildes in dem zu verarbeitenden Bild, Transformieren der Größe des Gesichtsbildes in eine vorbestimmte Größe.

3. Verfahren nach Anspruch 1 oder 2, das ferner umfasst:
vor dem Umwandeln (S102) des Attributs des Gesichtsbildes entsprechend dem Bearbeitungsattribut, Vorverarbeiten des Gesichtsbilds entsprechend dem Bearbeitungsattribut.

4. Verfahren nach Anspruch 1 bis 3, das ferner umfasst:
vor dem Zusammenführen (S104) des Attributbildes mit dem zu verarbeitenden Bild unter Verwendung des Maskierungsbildes, Durchführen einer Superauflösungsverarbeitung auf dem Attributbild, um ein Super-Defintion-Attributbild zu erzeugen; und
Zusammenführen des Super-Defintion-Attributbildes mit dem zu verarbeitenden Bild unter Verwendung des Maskierungsbildes.

5. Verfahren nach einem der Ansprüche 1 bis 4, wobei das Zusammenführen (S104) des Attributbildes mit dem zu verarbeitenden Bild unter Verwendung des Maskierungsbildes zum Erzeugen des Ergebnisbildes umfasst:
Ausrichten des Maskierungsbildes, des Attributbildes und des zu verarbeitenden Bildes entsprechend den Gesichtspositionen;
Bestimmen eines Bereichs in dem zu verarbeitenden Bild entsprechend den Pixelwerten von 0 in dem Maskierungsbild, und Beibehalten des Inhalts dieses Bereichs ohne Änderungen; und
Bestimmen eines Bereichs in dem verarbeitenden Bild entsprechend den Pixelwerten von 0 in dem Maskierungsbild, und Ersetzen des Bildinhalts dieses Bereichs durch Bildinhalt eines entsprechenden Bereichs in dem Attributbild.

6. Vorrichtung zur Gesichtsbearbeitung, die aufweist:
Mittel zum Erfassen (S101) eines Gesichtsbildes in einem zu verarbeitenden Bild;
Mittel zum Umwandeln (S102) eines Attributs des Gesichtsbildes entsprechend einem Bearbeitungsattribut, um ein Attributbild zu erzeugen;
**dadurch gekennzeichnet, dass** die Vorrichtung ferner aufweist:
Mittel zum semantischen Segmentieren (S103) des Attributbildes, um Gesichtsteile in dem Attributbild zu teilen, zum Bestimmen verschiedener bearbeiteter Teile des Gesichtsteils entsprechend dem Bearbeitungsattribut, um ein Maskierungsbild zu erzeugen, wobei die Pixelwerte in den bearbeiteten Teilen 1 sind, und wobei Pixelwerte in den verbleibenden Teilen der Gesichtsteile 0 sind; und
Mittel zum Zusammenführen (S104) des Attributbildes mit dem zu verarbeitenden Bild unter Verwendung des Maskierungsbildes, um ein Ergebnisbild zu erzeugen.

7. Vorrichtung nach Anspruch 6, die ferner aufweist:
Mittel zum Umwandeln der Größe des Gesichtsbildes in eine vorbestimmte Größe nach dem Erfassen (S101) des Gesichtsbildes in dem zu verarbeitenden Bild.

8. Vorrichtung nach Anspruch 6 oder 7, die ferner aufweist:
Mittel zum Vorverarbeiten des Gesichtsbilds entsprechend dem Bearbeitungsattribut vor dem Umwandeln (S102) des Attributs des Gesichtsbildes entsprechend dem Bearbeitungsattribut.

9. Vorrichtung nach einem der Ansprüche 6 bis 8, die ferner aufweist:
Mittel zum Durchführen einer Superauflösungsverarbeitung auf dem Attributbild, um ein Super-Defintion-Attributbild zu erzeugen, vor dem Zusammenführen (S104) des Attributbildes mit dem zu verarbeitenden Bild unter Verwenden des Maskierungsbildes,
Mittel zum Zusammenführen des Super-Defintion-Attributbildes mit dem zu verarbeitenden Bild unter Verwendung des Maskierungsbildes.

10. Vorrichtung nach einem der Ansprüche 6 bis 9, wobei die Mittel zum Zusammenführen (S104) umfassen:
Mittel zum Ausrichten des Maskierungsbildes, des Attributbildes und des zu verarbeitenden Bildes entsprechend den Gesichtspositionen;
Mittel zum Bestimmen eines Bereichs in dem zu verarbeitenden Bild entsprechend den Pixelwerten von 0 in dem Maskierungsbild, und Beibehalten des Inhalts dieses Bereichs ohne Änderungen; und
Mittel zum Bestimmen eines Bereichs in dem zu verarbeitenden Bild entsprechend den Pixelwerten von 0 in dem Maskierungsbild, und Ersetzen des Bildinhalts dieses Bereichs durch Bildinhalt eines entsprechenden Bereichs in dem Attributbild.

11. Elektronische Vorrichtung, die aufweist:
mindestens einen Prozessor; und
einen Speicher, der mit dem mindestens einen Prozessor kommunikativ verbunden ist;
wobei der Speicher Anweisungen speichert, die von dem mindestens einen Prozessor ausgeführt werden können, damit der mindestens eine Prozessor das Verfahren nach einem der Ansprüche 1 bis 5 durchführen kann.

12. Nichtflüchtiges computerlesbares Speichermedium, das Anweisungen aufweist, die bei Ausführung durch einen Computer bewirken, dass der Computer das Verfahren nach einem der Ansprüche 1 bis 5 durchführt.

13. Computerprogrammprodukt, das Anweisungen aufweist, die bei Ausführung des Programms durch einen Computer bewirken, dass der Computer das Verfahren nach einem der Ansprüche 1 bis 5 durchführt.

## Revendications

1. Procédé d'édition de visage, implémenté par ordinateur, comprenant :
l'acquisition (S101) d'une image de visage dans une image à traiter ;
la conversion (S102) d'un attribut de l'image de visage selon un attribut d'édition pour générer une image d'attribut ;
**caractérisé en ce que,** le procédé comprend en outre :
le fait de segmenter (S103) sémantiquement l'image d'attribut pour diviser des parties de visage dans l'image d'attribut, en déterminant différentes parties éditées des parties de visage selon l'attribut d'édition pour générer une image de masque avec des valeurs de pixels dans les parties éditées valant 1, et des valeurs de pixels dans les parties restantes des parties de visage valant 0 ; et
la fusion (S104) de l'image d'attribut avec l'image à traiter à l'aide de l'image de masque pour générer une image de résultat.

2. Procédé selon la revendication 1, comprenant en outre :
après acquisition (S101) de l'image de visage dans l'image à traiter, la transformation de la taille de l'image de visage en une taille prédéfinie.

3. Procédé selon la revendication 1 ou 2, comprenant en outre :
avant conversion (S102) de l'attribut de l'image de visage selon l'attribut d'édition, le prétraitement de l'image de visage correspondant à l'attribut d'édition.

4. Procédé selon l'une quelconque des revendications 1 à 3, comprenant en outre :
avant fusion (S104) de l'image d'attribut avec l'image à traiter à l'aide de l'image de masque, la mise en oeuvre d'un traitement de super-résolution sur l'image d'attribut pour générer une image d'attribut de super-définition ; et
la fusion de l'image d'attribut de super-définition avec l'image à traiter à l'aide de l'image de masque.

5. Procédé selon l'une quelconque des revendications 1 à 4, dans lequel la fusion (S104) de l'image d'attribut avec l'image à traiter à l'aide de l'image de masque pour générer l'image de résultat comprend :
l'alignement de l'image de masque, de l'image d'attribut et de l'image à traiter selon des positions de visage ;
la détermination d'une zone dans l'image à traiter correspondant aux valeurs de pixel de 0 dans l'image de masque, et le fait de garder le contenu d'image de cette zone inchangé ; et
la détermination d'une zone dans l'image à traiter correspondant aux valeurs de pixel de 1 dans l'image de masque, et le remplacement du contenu d'image de cette zone par un contenu d'image d'une zone correspondante dans l'image d'attribut.

6. Appareil d'édition de visage, comprenant :
un moyen permettant d'acquérir (S101) une image de visage dans une image à traiter ;
un moyen permettant de convertir (S102) un attribut de l'image de visage selon un attribut d'édition pour générer une image d'attribut ;
**caractérisé en ce que,** l'appareil comprend en outre :
un moyen permettant de, segmenter (S103) sémantiquement l'image d'attribut pour diviser des parties de visage dans l'image d'attribut, en déterminant différentes parties éditées des parties de visage selon l'attribut d'édition pour générer une image de masque avec des valeurs de pixels dans les parties éditées valant 1, et des valeurs de pixels dans les parties restantes des parties de visage valant 0 ; et
un moyen permettant de fusionner (S104) l'image d'attribut avec l'image à traiter à l'aide de l'image de masque pour générer une image de résultat.

7. Appareil selon la revendication 6, comprenant en outre :
un moyen permettant, après acquisition (S101) de l'image de visage dans l'image à traiter, de convertir la taille de l'image de visage en une taille prédéfinie.

8. Appareil selon la revendication 6 ou 7, comprenant en outre :
un moyen permettant, avant conversion (S102) de l'attribut de l'image de visage selon l'attribut d'édition, de prétraiter l'image de visage correspondant à l'attribut d'édition.

9. Appareil selon l'une quelconque des revendications 6 à 8, comprenant en outre :
un moyen permettant, avant fusion (S104) de l'image d'attribut avec l'image à traiter à l'aide de l'image de masque, de mettre en oeuvre un traitement de super-résolution sur l'image d'attribut pour générer une image d'attribut de super-définition ; et
un moyen permettant de fusionner l'image d'attribut de super-définition avec l'image à traiter à l'aide de l'image de masque.

10. Appareil selon l'une quelconque des revendications 6 à 9, dans lequel le moyen permettant de fusionner (S104) comprend :
un moyen permettant d'aligner l'image de masque, l'image d'attribut et l'image à traiter selon des positions de visage ;
un moyen permettant de déterminer une zone dans l'image à traiter correspondant aux valeurs de pixel de 0 dans l'image de masque, et de garder le contenu d'image de cette zone inchangé ; et
un moyen permettant de déterminer une zone dans l'image à traiter correspondant aux valeurs de pixel de 1 dans l'image de masque, et de remplacer le contenu d'image de cette zone par un contenu d'image d'une zone correspondante dans l'image d'attribut.

11. Dispositif électronique comprenant :
au moins un processeur ; et
une mémoire connectée à l'au moins un processeur par communications ;
dans lequel la mémoire stocke des instructions exécutables par l'au moins un processeur pour amener l'au moins un processeur à mettre en oeuvre le procédé selon l'une quelconque des revendications 1 à 5.

12. Support de stockage non transitoire lisible par ordinateur comprenant des instructions qui, lorsqu'elles sont exécutées par un ordinateur, amènent l'ordinateur à effectuer le procédé selon l'une quelconque des revendications 1 à 5.

13. Produit programme d'ordinateur comprenant des instructions qui, lorsque le programme est exécuté par un ordinateur, amènent l'ordinateur à effectuer le procédé selon l'une quelconque des revendications 1 à 5.
